# EUROPEAN PATENT APPLICATION

(11) **EP 4 566 565 A1**
(43) Date of publication of application: **11.06.2025**
(21) Application number: 23850404.7
(22) Date of filing: 01.08.2023
(51) Int. Cl.: A61C 7/08

(54) **CLEAR ALIGNER**

(30) Priority: 01.08.2022 KR 20220095488; 01.08.2022 KR 20220095489
(71) Applicant: Osstemimplant Co., Ltd., Gangseo-gu Seoul 07789 (KR)
(72) Inventor: LEE, Kyungwoo, Seoul 07789 (KR); SEO, Jinwoo, Seoul 07789 (KR); OH, Soohwan, Seoul 07789 (KR); KIM, Myeoungkyu, Seoul 07789 (KR); KIM, Hongseok, Seoul 07789 (KR); SHIM, Nayoung, Seoul 07789 (KR)
(74) Representative: Klunker IP Patentanwälte PartG mbB
(86) International application number: PCT/KR2023/011264
(87) International publication number: WO 2024/029903

(57) **Abstract**

One embodiment of the present invention provides a clear aligner comprising: a clear aligning body in which a channel for accommodating a tooth to be corrected is formed in order to move the tooth from the initial position to a target position; and an occlusal part defined by the clear aligning body, and positioned at an occlusal area coming into contact with an antagonist tooth during occlusion, wherein the occlusal part is thicker than the area that excludes the occlusal part.

## Description

### [Technical Field]

The present invention relates to a clear aligner.

### [Background Art]

Orthodontics is a treatment method applied to treat irregular teeth arrangement or abnormal bite of the upper and lower jaws. Conventional orthodontics is performed by attaching orthodontic brackets made of non-toxic materials to teeth and then applying force of orthodontic wires to the brackets to correct malocclusion of teeth. In the case of conventional orthodontics using brackets and wires, since the brackets and wires are fixed to the teeth during treatment, it is not aesthetically pleasing and may cause oral hygiene problems.

To address these shortcomings, in recent years, a new orthodontic treatment method using clear aligners has been widely performed worldwide. Since clear aligners do not use brackets and wires, but rather use transparent polymer materials, clear aligners are aesthetically superior and can be removed when necessary, making them effective for oral hygiene management. In addition, clear aligners cause relatively less foreign body sensation, allowing patients to receive orthodontic treatment comfortably.

### Related Art Document

(Patent Document 1) Korean Patent Registration No. 10-1510857 (April 03, 2015)

### [Disclosure]

### [Technical Problem]

The present invention is for addressing the problems of the related art and is directed to providing a clear aligner that can induce posterior intrusion by increasing a thickness of an occlusal part or prevent premature contact of teeth by decreasing the thickness of the occlusal part.

### [Technical Solution]

To achieve the above objective, one aspect of the present invention provides a clear aligner including a clear aligning body in which a channel accommodating a tooth to be aligned is formed to move the tooth from an initial position to a target position, and an occlusal part defined in the clear aligning body and located in an occlusal area coming into contact with an antagonistic tooth during occlusion, wherein a thickness of the occlusal part is formed to be thicker than a thickness of an area excluding the occlusal part.

In one embodiment of the present invention, a thickness of the clear aligning body may gradually increase toward the occlusal part.

In one embodiment of the present invention, the clear aligner may further include a strength reinforcing part that is, relative to a movement direction of the tooth to be aligned, formed conformally on an outer surface of the clear aligning body located at a distal side from the movement direction to reinforce an orthodontic force.

In one embodiment of the present invention, for an expansion case, the strength reinforcing part may be formed on a lingual side outer surface of the clear aligning body.

In one embodiment of the present invention, for a retraction case, the strength reinforcing part may be formed on a buccal side outer surface of the clear aligning body.

In one embodiment of the present invention, for an extrusion case, the strength reinforcing part may be formed on portions of an outer surface of the clear aligning body that are located on proximal sides from a dental root based on heights of contour of a tooth.

In one embodiment of the present invention, for an intrusion case, the strength reinforcing part may be formed on portions of an outer surface of the clear aligning body that are located on distal sides from a dental root based on heights of contour of a tooth.

In one embodiment of the present invention, for a rotation case, the strength reinforcing part may be formed on portions of an outer surface of the clear aligning body that are located diagonally from each other when four sections of an occlusal surface of a tooth are set based on groove lines formed on the occlusal surface.

In one embodiment of the present invention, for an angulation case, the strength reinforcing part may be formed on a mesial side outer surface of the clear aligning body that is located in one direction based on a height of contour of a tooth and a distal side outer surface of the clear aligning body that is located in the other direction based on another height of contour of the tooth.

In one embodiment of the present invention, for a torque control case, the strength reinforcing part may be formed on a lingual side outer surface of the clear aligning body that is located in one direction based on a height of contour of a tooth and a buccal side outer surface of the clear aligning body that is located in the other direction based on another height of contour of the tooth.

### [Advantageous Effects]

According to one aspect of the present invention, in a clear aligner according to a first embodiment of the present invention, a thickness of an occlusal part is formed to be thinner than a thickness of an area excluding the occlusal part, and it is possible to prevent premature contact of teeth including a posterior region during occlusion. In addition, since an occlusal force is reduced due to a decrease in the thickness of the occlusal part, it is possible to prevent posterior intrusion and an open bite. Further, since the decrease in the thickness of the occlusal part causes an increase in elasticity and an increase in a contact area, a traction force and a retaining force can increase. Furthermore, a foreign body sensation at the time of wearing the clear aligner can be reduced due to the decrease in the thickness of the occlusal part.

According to another aspect of the present invention, in a clear aligner according to a second embodiment of the present invention, a thickness of an occlusal part is formed to be thicker than a thickness of an area excluding the occlusal part, and it is possible to induce posterior intrusion due to an increase in an occlusal force. In addition, since the thickness of the occlusal part is formed to be thicker than the thickness of the area excluding the occlusal part, it is possible to reduce a tendency of the clear aligner to stretch in buccal and lingual directions due to masticatory pressure. Further, when the thickness of the occlusal part is formed to be thicker than the thickness of the area excluding the occlusal part, the durability of the clear aligner can be improved due to an increase in the strength thereof. Furthermore, the direction and angle of an occlusal surface of the occlusal part can be adjusted to induce intentional sliding of the mandible as the occlusal surface occludes with an occlusal part worn on an antagonistic tooth, and accordingly, it can help treat temporomandibular joints in patients with Class II and Class **III** malocclusions. Moreover, when the thickness of the occlusal part is adjusted for the occlusal part to be parallel to the occlusal part worn on the antagonistic tooth, wear of the clear aligner can be reduced for patients with bruxism, and a force applied to the mandible can be reduced.

It should be understood that the effects of the present invention are not limited to the above-described effects, and include all effects inferable from a configuration of the invention described in the detailed description or claims of the present invention.

### [Description of Drawings]

FIG. 1(a) is a top view of a clear aligner according to one embodiment of the present invention, and FIG. 1(b) is a cross-sectional view along line A-A' of FIG. 1(a).
FIG. 2(a) shows a maxillary teeth model with an occlusal area indicated thereon according to one embodiment of the present invention, and FIG. 2(b) shows a mandibular teeth model with an occlusal area indicated thereon according to one embodiment of the present invention.
FIG. 3 is a view showing an occlusion between a maxillary tooth and a mandibular tooth in a state in which the clear aligner according to one embodiment of the present invention is worn on the teeth.
FIG. 4 is a view showing an occlusion between a maxillary tooth and a mandibular tooth in a state in which the clear aligner including strength reinforcing parts according to one embodiment of the present invention is worn on the teeth.
FIG. 5 shows an application area of a strength reinforcing part according to an expansion case according to one embodiment of the present invention.
FIG. 6 shows an application area of a strength reinforcing part according to a retraction case according to one embodiment of the present invention.
FIG. 7 shows application areas of strength reinforcing parts according to an extrusion case according to one embodiment of the present invention.
FIG. 8 shows application areas of strength reinforcing parts according to an intrusion case according to one embodiment of the present invention.
FIG. 9 shows application areas of strength reinforcing parts according to a rotation case according to one embodiment of the present invention.
FIG. 10 shows application areas of strength reinforcing parts according to an angulation case according to one embodiment of the present invention.
FIG. 11 shows application areas of strength reinforcing parts according to a torque control case according to one embodiment of the present invention.
FIG. 12(a) is a top view of a clear aligner according to another embodiment of the present invention, and FIG. 12(b) is a cross-sectional view along line A-A' of FIG. 12(a).
FIG. 13 is a view showing an occlusion between a maxillary tooth and a mandibular tooth in a state in which the clear aligner according to another embodiment of the present invention is worn on the teeth.
FIG. 14 is a view showing an occlusion between a maxillary tooth and a mandibular tooth in a state in which the clear aligner including strength reinforcing parts according to another embodiment of the present invention is worn on the teeth.

### [Modes of the Invention]

Hereinafter, the present invention will be described with reference to the accompanying drawings. However, the present invention may be implemented in various different forms and is not limited to the embodiments described herein. Also, in the drawings, in order to clearly describe the present invention, parts irrelevant to the description are omitted, and like parts are denoted by like reference numerals throughout the specification.

Throughout the specification, when a certain part is described as being "connected" to another part, this includes not only a case in which the part is "directly connected" to the other part, but also a case in which the part is "indirectly connected" to the other part with another member disposed therebetween. Also, when a certain part is described as "including" a certain component, unless specifically described otherwise, this means that the part may further include other components instead of excluding other components.

Hereinafter, embodiments of the present invention will be described in detail with reference to the accompanying drawings.

Orthodontics can be classified into a fixed orthodontic method that involves attaching brackets made of hard materials such as metal, resin, and ceramic to teeth and aligning the teeth through elasticity of a wire and a removable orthodontic method that uses an aligner that is easy to attach and detach and has elasticity. **In** particular, a clear aligning method, which is one removable orthodontic method, is a method that involves wearing a clear aligner made of a transparent material on teeth and is highly favored compared to other orthodontic methods due to the aligner being able to be worn and removed freely as well as being invisible from the outside. The clear aligner should be made of an elastic material to make it possible to wear and remove the clear aligner.

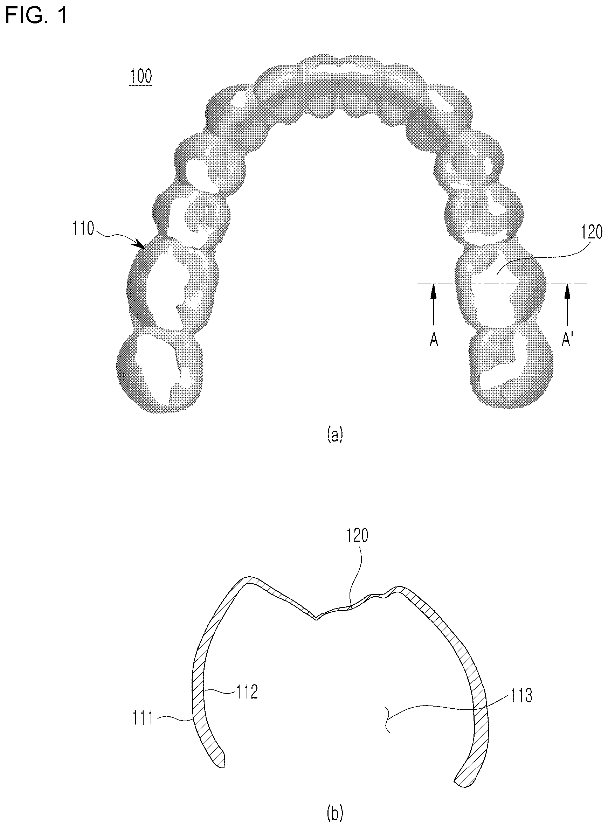

FIG. 1(a) is a top view of a clear aligner according to one embodiment of the present invention, and FIG. 1(b) is a cross-sectional view along line A-A' of FIG. 1(a).

A clear aligner 100 is fabricated by setting virtual treatment object data based on initial data of teeth of a patient, generating intermediate data for each step so that the teeth can be gradually moved from their initial positions to target positions, and then indirectly outputting or directly outputting the intermediate data for each step and the object data.

An indirect output method is configured to include a step in which a device designing the clear aligner 100 outputs a setup model of teeth and a step in which a device fabricating the clear aligner 100 performs vacuum forming by using the setup model as a teeth mold and applying pressure so that the teeth mold is covered with a forming sheet made of a transparent material. That is, the clear aligner 100 according to the indirect output method is fabricated through vacuum forming using a forming sheet. The setup model is teeth arrangement data that is, prior to orthodontic treatment, obtained by performing orthodontic diagnosis, establishing a treatment plan from a teeth model of a patient, and moving teeth in an ideal form according to the treatment plan.

A direct output method is a method in which a device designing a clear aligner directly fabricates a clear aligner without a device fabricating a clear aligner, and the direct output method is configured to include a step of generating a clear aligner model and a step of directly outputting the clear aligner model through a 3D device such as a 3D printer. That is, the clear aligner 100 according to the direct output method may be fabricated through a 3D device such as a 3D printer.

The clear aligner 100 may be used for various cases such as expansion, retraction, extrusion, intrusion, and rotation to surround mandibular teeth or maxillary teeth to be aligned and arrange the teeth from their initial positions to target positions. That is, the clear aligner 100 is used by being worn on teeth of a patient and may be used by being fabricated for each step in consideration of the maximum movement amount of teeth that is necessary for alignment.

The clear aligner 100 may be made of a material having elasticity. The elasticity or shape retention ability of the clear aligner 100 may provide a force in a predetermined direction to teeth and may move the teeth from their initial positions to target positions.

According to one embodiment, the clear aligner 100 may be made to include one or more selected from the group consisting of polycarbonate, polyethylene terephthalate, polyurethane, and polyethylene terephthalate glycol modified. According to another embodiment, the clear aligner 100 may be made of a polymer material or an elastomer. Examples of the polymer material or elastomer may include natural polyisoprene such as cis-1,4-polyisoprene natural rubber and trans-1,4-polyisoprene gutta-percha, synthetic polyisoprene, polybutadiene, chloroprene rubber, polychloroprene, neoprene, baypren, butyl rubber, halogenated butyl rubber, styrene-butadiene rubber, nitrile rubber, halogenated nitrile rubber, ethylene propylene rubber, ethylene propylene-diene rubber, epichlorohydrin rubber, polyacrylate rubber, silicone rubber, fluorosilicone rubber, fluoroelastomer, perfluorelastomer, polyether block amide, chlorosulfonated polyethylene, ethylene vinyl acetate, thermoplastic elastomer, polysulfide rubber, elastolefin, and combinations thereof. The material of the clear aligner 100 listed above is exemplary, and the material is not limited to the above. That is, any material having physical properties necessary for achieving the function of the clear aligner 100, such as transparency and elasticity, may be used as a material of the clear aligner 100.

Referring to FIG. 1, the clear aligner 100 of the present invention includes a clear aligning body 110. The clear aligning body 110 has an outer surface 111, an inner surface 112, and a channel 113 defined by the inner surface 112 and accommodating teeth. That is, the clear aligning body 110 is configured to be fitted to teeth to be aligned to move the teeth from their initial positions to target positions for each step. Here, the clear aligning body 110 may have a negative impression form reflecting target positions for each step of orthodontic treatment.

According to one embodiment, the clear aligner 100 includes an occlusal part 120. The occlusal part 120 may be defined in the clear aligning body and may be formed in an occlusal area coming into contact with antagonistic teeth during occlusion. A position of the occlusal part 120 on the clear aligner 100 may vary according to an occlusal area of the clear aligner 100 that is fabricated for each step of orthodontic treatment.

Meanwhile, a thickness of the occlusal part 120 may be formed to be thinner than a thickness of an area excluding the occlusal part 120.

In the case of a conventional clear aligner, since a thickness of a clear aligning body including an occlusal part is configured to be uniform throughout, a phenomenon of premature contact between a posterior region and antagonistic teeth may occur due to the thickness of the occlusal part during occlusion. When premature contact occurs between a posterior region and antagonistic teeth, a force causing intrusion of teeth may be generated, and when the force continues, unintended posterior intrusion may occur, or negative consequences for temporomandibular joints may occur. In addition, an open bite may occur due to the thickness of the occlusal part.

That is, in the clear aligner 100 of the present invention, a thickness of the occlusal part 120 is formed to be thinner than a thickness of an area excluding the occlusal part 120, and it is possible to prevent premature contact of teeth including a posterior region during occlusion, which makes it possible to prevent posterior intrusion and an open bite.

Meanwhile, it is possible to induce anterior intrusion when an anterior-side thickness of the clear aligner 100 is formed to be thick and a thickness of the occlusal part 120 on a posterior side is formed to be thin.

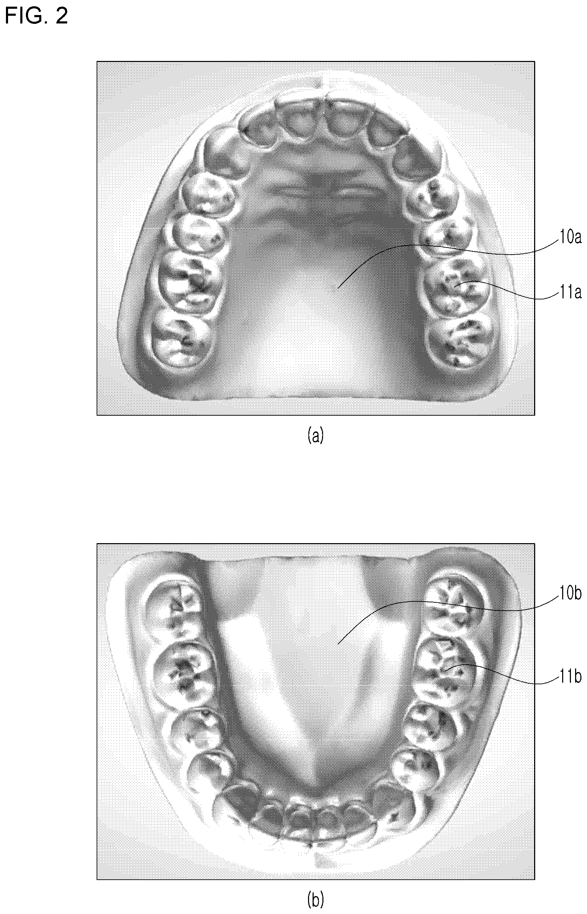

FIG. 2(a) shows a maxillary teeth model with an occlusal area indicated thereon according to one embodiment of the present invention, and FIG. 2(b) shows a mandibular teeth model with an occlusal area indicated thereon according to one embodiment of the present invention.

Referring to FIGS. 1 and 2, the occlusal part 120 may be formed on the clear aligning body 110 based on contact portions 11a and 11b mapped by a maxillary digital teeth model 10a and a mandibular digital teeth model 10b. Mapping refers to visually expressing the contact portions 11a and 11b so that the contact portions 11a and 11b can be distinguished according to a contact strength between maxillary teeth and mandibular teeth. That is, a boundary defining the occlusal part 120 may be formed based on the contact portions 11a and 11b mapped according to the contact strength. In this way, since the occlusal part 120 is formed on a more accurate occlusal area of the clear aligning body 110, it is possible to prevent premature contact of teeth.

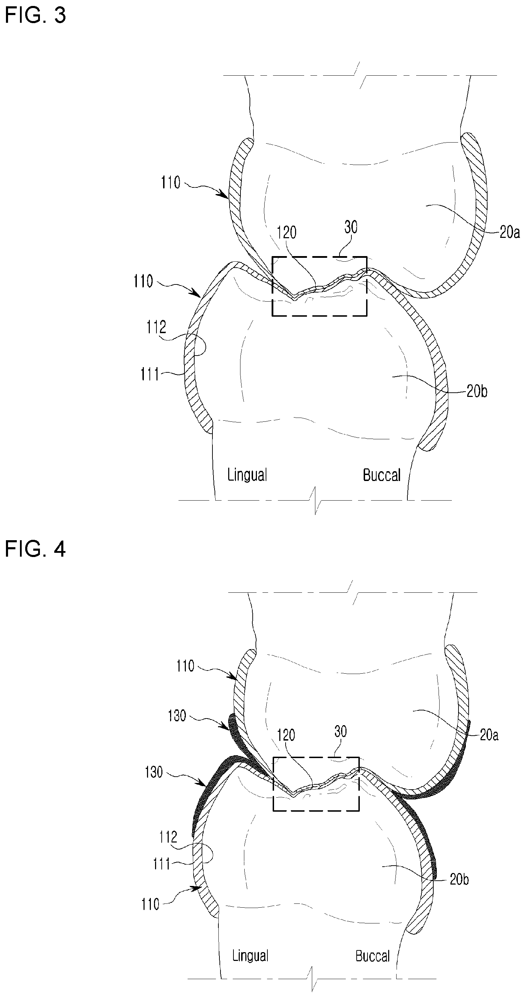

FIG. 3 is a view showing an occlusion between a maxillary tooth and a mandibular tooth in a state in which the clear aligner according to one embodiment of the present invention is worn on the teeth.

Description will be given below focusing on a posterior region as an example. However, technical features of the clear aligner applied to the posterior region may identically apply to the whole teeth.

Referring to FIG. 3, a maxillary tooth 20a and a mandibular tooth 20b form an occlusal area 30 during occlusion. A clear aligner 100 includes a clear aligning body 110 worn on the teeth and an occlusal part 120 formed on the clear aligning body 110 in an area corresponding to the occlusal area 30.

According to one embodiment, the clear aligning body 110 may include a boundary defining the occlusal part 120 and may be configured to have a thickness that gradually decreases toward the occlusal part 120.

The occlusal area 30 may be set to further include a clearance so that, in consideration of lateral occlusion as well as vertical occlusion, antagonistic teeth do not come into contact with the boundary of the clear aligning body 110 during occlusion, or the boundary of the clear aligning body 110 worn on the maxillary teeth and the boundary of the clear aligning body 110 worn on the mandibular teeth do not come into contact with each other during occlusion. For example, the clearance may be about 1 mm or more.

In this way, by forming the thickness of the occlusal part 120 of the clear aligner 100 to be thin, it is possible to prevent a problem of premature contact with antagonistic teeth that may occur during occlusion due to an occlusal side thickness of the clear aligner 100.

FIG. 4 is a view showing an occlusion between a maxillary tooth and a mandibular tooth in a state in which the clear aligner including strength reinforcing parts according to one embodiment of the present invention is worn on the teeth.

Referring to FIG. 4, the clear aligner 100 of the present invention may further include strength reinforcing parts 130. Here, when the thickness of the occlusal part 120 of the clear aligner 100 is formed to be thin, an orthodontic force acting on the teeth may decrease. Accordingly, by further forming the strength reinforcing parts 130 on the clear aligner 100, it is possible to compensate for the orthodontic force that may decrease due to the occlusal part 120. That is, the strength reinforcing parts 130 may be formed on the outer surface 111 of the clear aligning body 110 that is adjacent to the occlusal part 120.

The strength reinforcing parts 130 may be formed to compensate for a thickness of a specific area of the clear aligning body 100 according to each case of orthodontic treatment. That is, the strength reinforcing parts 130 are configured to make an area to which a force of the clear aligner 100 is applied to be thicker than an area to which the force is not applied, thereby allowing the force to be sufficiently delivered to teeth at corresponding positions.

The strength reinforcing parts 130 may be integrally fabricated with the clear aligning body 110 using a material identical to the material of the clear aligning body 110 or may be separately fabricated using a different material from the clear aligning body 110 and then coupled conformally to the clear aligning body 110. Here, for example, the strength reinforcing parts 130 may be integrally formed with the clear aligning body 110 using a 3D printer.

The strength reinforcing part 130 may be formed only on any one portion of the outer surface 111 of the clear aligning body 110, and another portion of the outer surface 111 of the clear aligning body 110 may be exposed as it is to the outside. Here, the strength reinforcing part 130 may be formed in a tapered shape, a knife edge shape, or a wedge shape to minimize a foreign body sensation at a boundary with the outer surface 111 of the clear aligning body 110 on which the strength reinforcing part 130 is not formed.

According to one embodiment, relative to a movement direction of a tooth to be aligned, the strength reinforcing part 130 may be formed on the outer surface 111 of the clear aligning body 110 located at a distal side from the movement direction. That is, the strength reinforcing part 130 is configured to compensate for an orthodontic force in a target movement direction of the tooth to be aligned.

In this way, the strength reinforcing part 130 may improve tooth movement and a tooth movement speed by minimizing deformation of the clear aligner 100 and extending a period during which a predetermined force is applied to the tooth for the tooth movement to occur as planned. Ultimately, it is possible to increase a tooth aligning speed and improve accuracy.

Application areas of the strength reinforcing parts 130 on the clear aligning body 110 according to each case of orthodontic treatment will be described below. Here, description will be given based on a mandibular posterior region, and technical features of the clear aligner applied to the mandibular posterior region may identically apply to the whole teeth.

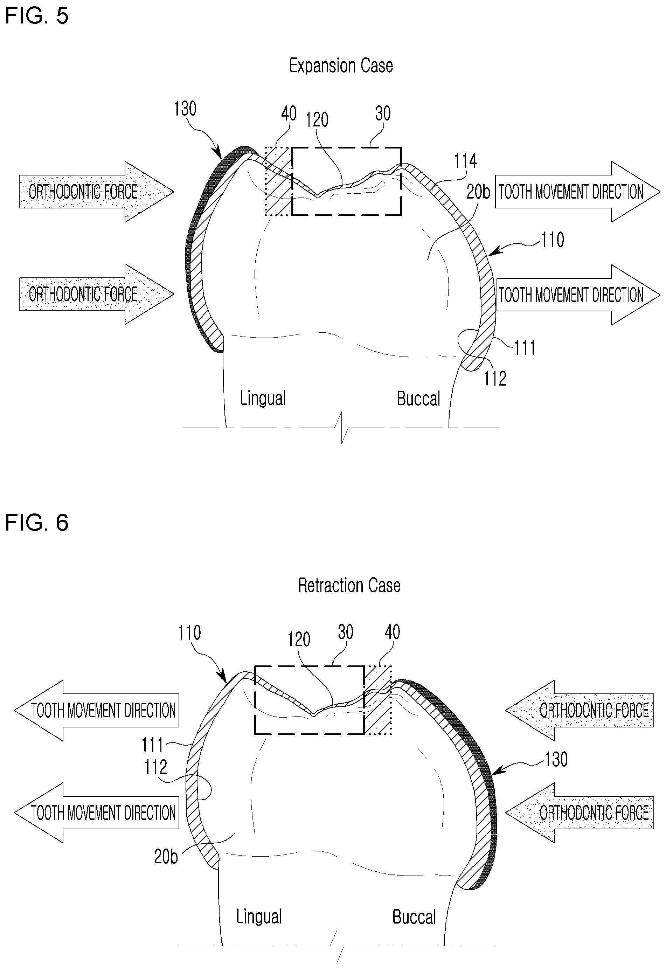

FIG. 5 shows an application area of a strength reinforcing part according to an expansion case according to one embodiment of the present invention.

According to one embodiment, for an expansion case, the strength reinforcing part 130 is configured to be formed on a lingual side outer surface 111 of the clear aligning body 110.

The expansion case refers to a case in which an orthodontic force is applied from a lingual side to a buccal side to a tooth to be aligned in order to move the tooth.

Here, in order to move the tooth to be aligned from the lingual side to the buccal side, it is necessary to reinforce a thickness of the lingual side outer surface 111 of the clear aligning body 110. That is, as the strength reinforcing part 130 is formed on the lingual side outer surface 111 of the clear aligning body 110, it is possible to compensate for a decrease in the orthodontic force caused by the occlusal part 120.

In the expansion case, the occlusal part 120 may be formed in consideration of an additional occlusal area 40 according to teeth movement as well as an initial occlusal area 30.

FIG. 6 shows an application area of a strength reinforcing part according to a retraction case according to one embodiment of the present invention.

According to one embodiment, for a retraction case, the strength reinforcing part 130 is configured to be formed on a buccal side outer surface 111 of the clear aligning body 110.

The retraction case refers to a case in which an orthodontic force is applied from a buccal side to a lingual side to a tooth to be aligned in order to move the tooth.

Here, in order to move the tooth to be aligned from the buccal side to the lingual side, it is necessary to reinforce a thickness of the buccal side outer surface 111 of the clear aligning body 110. That is, as the strength reinforcing part 130 is formed on the buccal side outer surface 111 of the clear aligning body 110, it is possible to compensate for a decrease in the orthodontic force caused by the occlusal part 120.

In the retraction case, the occlusal part 120 may be formed in consideration of an additional occlusal area 40 according to teeth movement as well as an initial occlusal area 30.

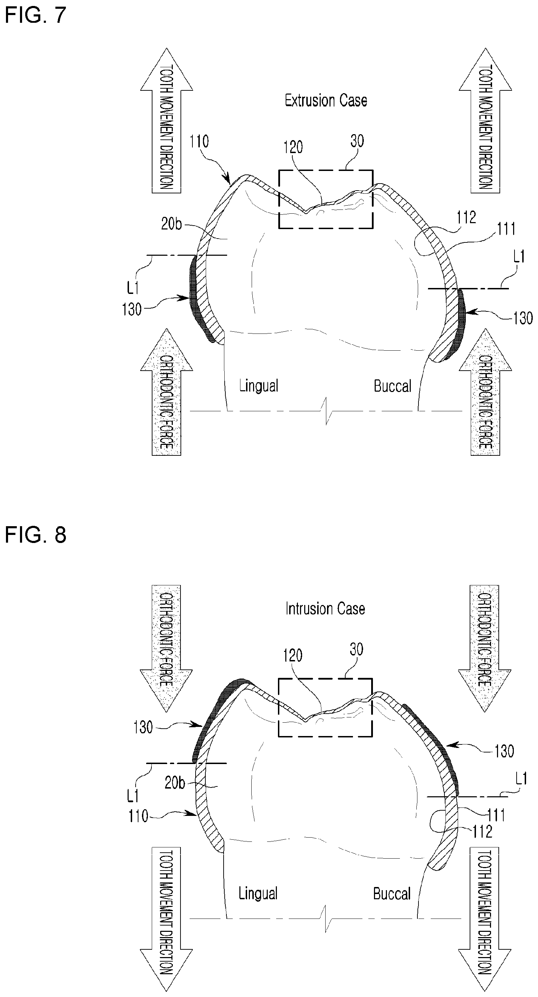

FIG. 7 shows application areas of strength reinforcing parts according to an extrusion case according to one embodiment of the present invention.

According to one embodiment, for an extrusion case, the strength reinforcing parts 130 are configured to be formed on portions of an outer surface 111 of the clear aligning body 110 that are located on proximal sides from a dental root based on heights of contour L1 of a tooth (based on a mandibular tooth, sides below the heights of contour L1). Here, the heights of contour L1 of the tooth are lines connecting points where the tooth is at its greatest bulge in a lateral direction.

The extrusion case refers to a case in which an orthodontic force is applied in an extrusion direction from a dental root to a tooth to be aligned in order to move the tooth.

Here, in order to move the tooth to be aligned in the extrusion direction, it is necessary to reinforce thicknesses of portions of the outer surface 111 located on proximal sides from a dental root based on heights of contour L1 of a tooth (based on a mandibular tooth, sides below the heights of contour L1). That is, as the strength reinforcing parts 130 are formed on the portions of the outer surface 111 located on the proximal sides from the dental root (based on the mandibular tooth, the sides below the heights of contour L1), it is possible to compensate for a decrease in the orthodontic force caused by the occlusal part 120.

FIG. 8 shows application areas of strength reinforcing parts according to an intrusion case according to one embodiment of the present invention.

According to one embodiment, for an intrusion case, the strength reinforcing parts 130 are configured to be formed on portions of an outer surface 111 of the clear aligning body 110 that are located on distal sides from a dental root based on heights of contour L1 of a tooth (based on a mandibular tooth, sides above the heights of contour L1). Here, the heights of contour L1 of the tooth are lines connecting points where the tooth is at its greatest bulge in a lateral direction.

The intrusion case refers to a case in which an orthodontic force is applied in an intrusion direction to a tooth to be aligned in order to move the tooth.

Here, in order to move the tooth to be aligned in the intrusion direction, it is necessary to reinforce thicknesses of portions of the outer surface 111 located on proximal sides from a dental root based on heights of contour L1 of a tooth (based on a mandibular tooth, sides below the heights of contour L1). That is, as the strength reinforcing parts 130 are formed on the portions of the outer surface 111 located on the distal sides from the dental root (based on the mandibular tooth, the sides above the heights of contour L1), it is possible to compensate for a decrease in the orthodontic force caused by the occlusal part 120.

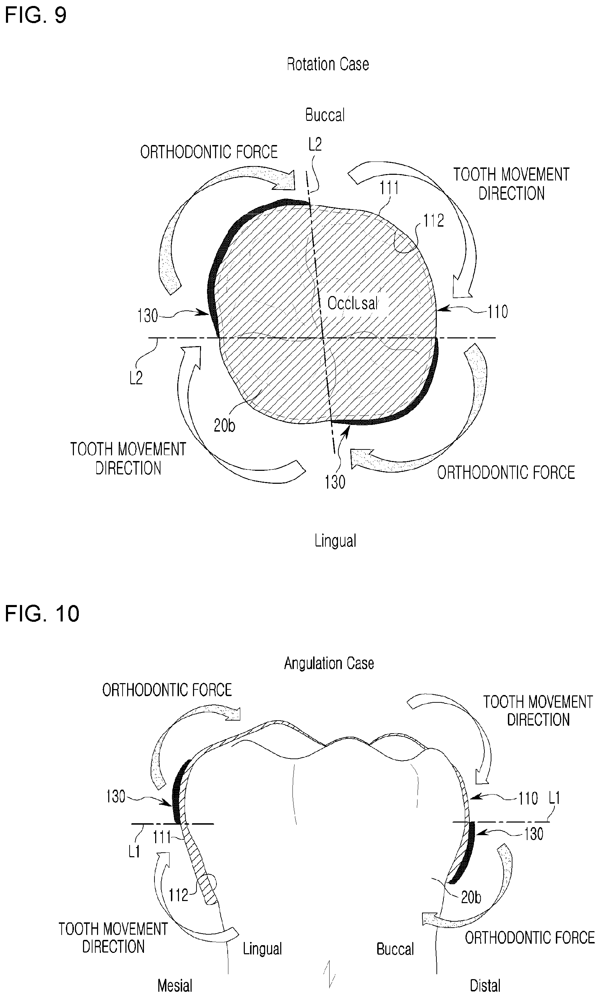

FIG. 9 shows application areas of strength reinforcing parts according to a rotation case according to one embodiment of the present invention.

According to one embodiment, for a rotation case, the strength reinforcing parts 130 are configured to be formed on portions of an outer surface 111 of the clear aligning body 110 that are located diagonally from each other when four sections of an occlusal surface of a tooth are set based on groove lines L2 formed on the occlusal surface. Here, the groove lines L2 are lines connecting points of grooves formed on edges facing each other among edges of the tooth that define the occlusal surface.

The rotation case refers to a case in which an orthodontic force is applied in a rotation direction to a tooth to be aligned to rotate the tooth.

Here, in order to rotate the tooth to be aligned, it is necessary to reinforce thicknesses of portions of the outer surface 111 of the clear aligning body 110 that are located diagonally from each other when four sections of an occlusal surface of a tooth are set based on groove lines L2 formed on the occlusal surface. That is, as the strength reinforcing parts 130 are formed on the portions of the outer surface 111 of the clear aligning body 110 that are located diagonally from each other based on the groove lines L2, it is possible to compensate for a decrease in the orthodontic force caused by the occlusal part 120.

FIG. 10 shows application areas of strength reinforcing parts according to an angulation case according to one embodiment of the present invention.

According to one embodiment, for an angulation case, the strength reinforcing parts are configured to be formed on a mesial side outer surface 111 of the clear aligning body 110 that is located in one direction based on a height of contour L1 of a tooth and a distal side outer surface 111 of the clear aligning body 110 that is located in the other direction based on another height of contour L1 of the tooth. Here, the heights of contour L1 of the tooth are lines connecting points where the tooth is at its greatest bulge in a lateral direction.

The angulation case refers to a case in which an orthodontic force is applied in a direction in which mesial-distal slopes of a tooth are desired to be adjusted.

Here, in order to move the tooth to be aligned in a slope adjustment direction, there is a need to reinforce a thickness of the mesial side outer surface 111 of the clear aligning body 110 that is located in one direction based on a height of contour L1 of the tooth and a thickness of the distal side outer surface 111 of the clear aligning body 110 that is located in the other direction based on another height of contour L1 of the tooth. That is, as the strength reinforcing parts 130 are formed on a specific area of the mesial side outer surface 111 and a specific area of the distal side outer surface 111, it is possible to compensate for a decrease in the orthodontic force caused by the occlusal part 120.

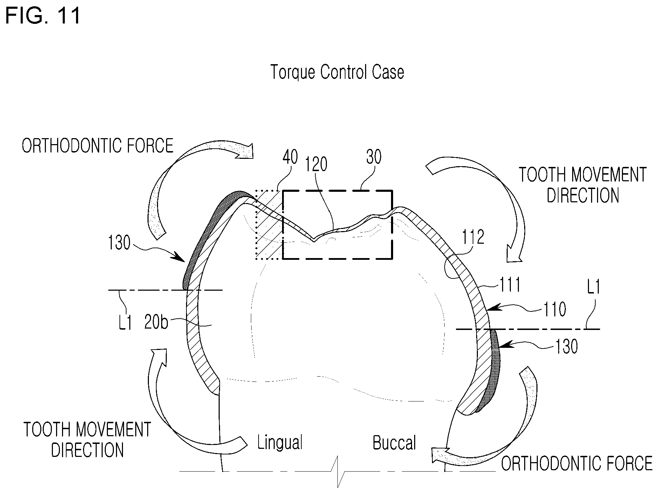

FIG. 11 shows application areas of strength reinforcing parts according to a torque control case according to one embodiment of the present invention.

According to one embodiment, for a torque control case, the strength reinforcing parts 130 are configured to be formed on a lingual side outer surface 111 of the clear aligning body 110 that is located in one direction based on a height of contour L1 of a tooth and a buccal side outer surface 111 of the clear aligning body 110 that is located in the other direction based on another height of contour L1 of the tooth. Here, the heights of contour L1 of the tooth are lines connecting points where the tooth is at its greatest bulge in a lateral direction.

The torque control case refers to a case in which an orthodontic force is applied in a direction in which lingual-buccal slopes of a tooth are desired to be adjusted.

Here, in order to move the tooth to be aligned in a slope adjustment direction, there is a need to reinforce a thickness of the lingual side outer surface 111 of the clear aligning body 110 that is located in one direction based on a height of contour L1 of the tooth and a thickness of the buccal side outer surface 111 of the clear aligning body 110 that is located in the other direction based on another height of contour L1 of the tooth. That is, as the strength reinforcing parts 130 are formed on a specific area of the lingual side outer surface 111 and a specific area of the buccal side outer surface 111, it is possible to compensate for a decrease in the orthodontic force caused by the occlusal part 120.

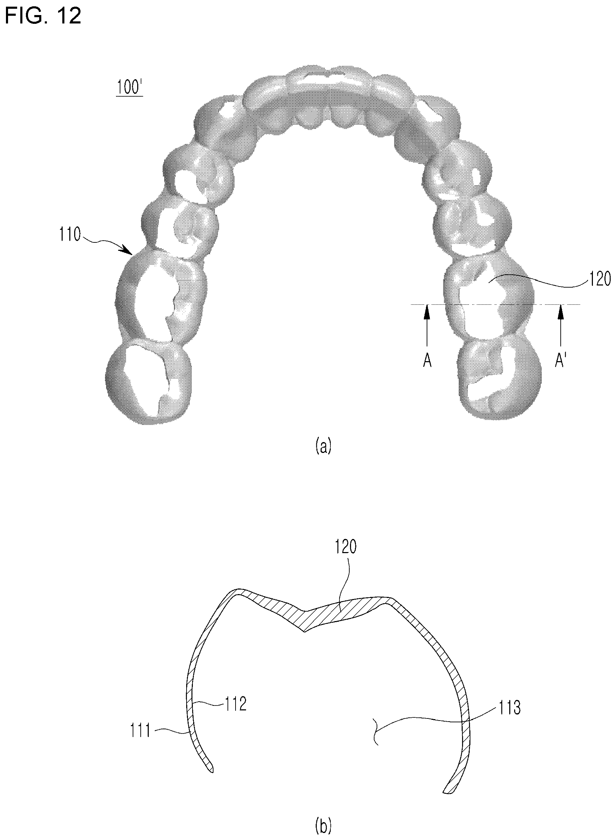

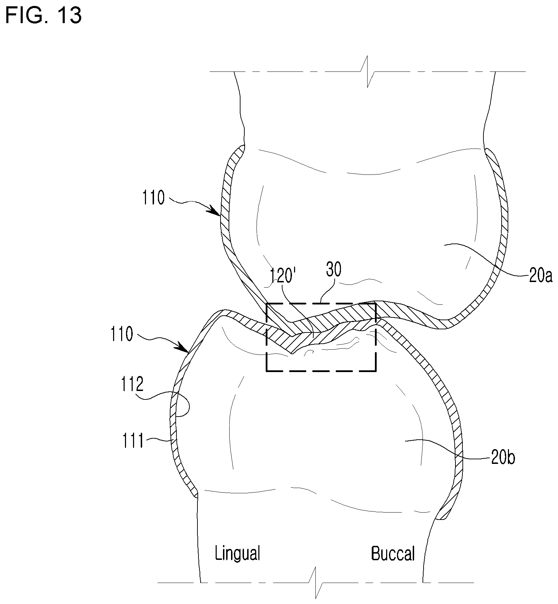

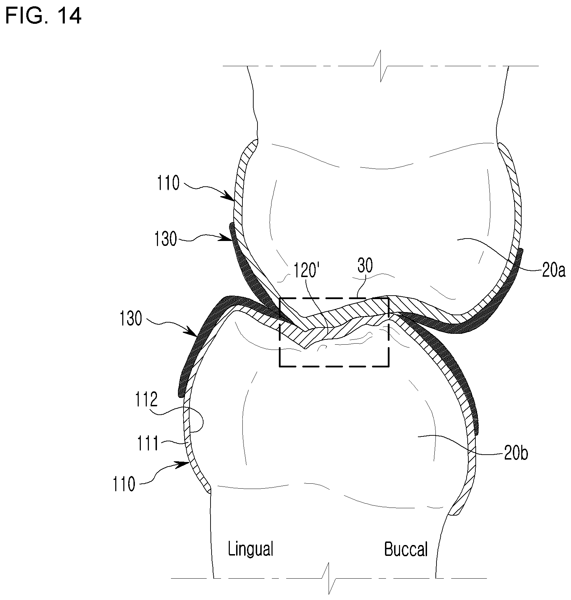

FIG. 12(a) is a top view of a clear aligner according to another embodiment of the present invention, FIG. 12(b) is a cross-sectional view along line A-A' of FIG. 12(a), FIG. 13 is a view showing an occlusion between a maxillary tooth and a mandibular tooth in a state in which the clear aligner according to another embodiment of the present invention is worn on the teeth, and FIG. 14 is a view showing an occlusion between a maxillary tooth and a mandibular tooth in a state in which the clear aligner including strength reinforcing parts according to another embodiment of the present invention is worn on the teeth.

A clear aligner 100' according to a second embodiment will be described below with reference to FIGS. 12 to 14, and differences from the clear aligner 100 according to a first embodiment described above will be mainly described. The content relating to the strength reinforcing parts 130 described above may identically apply to the clear aligner 100' according to the second embodiment.

In the clear aligner 100' according to the second embodiment of the present invention, a thickness of an occlusal part 120' may be formed to be thicker than a thickness of an area excluding the occlusal part 120'.

The occlusal part 120' is an area where continuous contact with an antagonistic tooth occurs, and when the thickness of the occlusal part 120' is formed to be thicker than the thickness of the area excluding the occlusal part 120', it is possible to improve durability and reduce a tendency of the clear aligner 100' to stretch in buccal and lingual directions due to masticatory pressure, and thus a traction force and a retaining force of the clear aligner 100' can be improved.

In addition, when the thickness of the occlusal part 120' increases, it is possible to induce premature contact between a posterior region and antagonistic teeth, and accordingly, it is possible to more efficiently induce posterior intrusion in an orthodontic case that requires posterior intrusion.

According to one embodiment, the direction and angle of an occlusal surface of the occlusal part 120' may be adjusted to induce intentional sliding of the mandible as the occlusal surface occludes with an occlusal part 120' worn on an antagonistic tooth. Here, a direction in which sliding of the mandible is induced may be forward in the case of Class II malocclusion and rearward in the case of Class III malocclusion.

According to one embodiment, the occlusal part 120' may be formed to be parallel to the occlusal part 120' worn on the antagonistic tooth. That is, when the thickness of the occlusal part 120' is adjusted for the occlusal part 120' to be parallel to the antagonistic tooth, wear of the clear aligner 100' can be reduced for patients with bruxism, and a force applied to the mandible can be reduced.

Referring to FIG. 13, a maxillary tooth 20a and a mandibular tooth 20b form an occlusal area 30 during occlusion. A clear aligner 100' includes a clear aligning body 110 worn on the teeth and an occlusal part 120' formed on the clear aligning body 110 in an area corresponding to the occlusal area 30.

According to one embodiment, the clear aligning body 110 may include a boundary defining the occlusal part 120' and may be configured to have a thickness that gradually increases toward the occlusal part 120'.

The occlusal area 30 may be set to further include a clearance so that, in consideration of lateral occlusion as well as vertical occlusion, antagonistic teeth do not come into contact with the boundary of the clear aligning body 110 during occlusion, or the boundary of the clear aligning body 110 worn on the maxillary teeth and the boundary of the clear aligning body 110 worn on the mandibular teeth do not come into contact with each other during occlusion. For example, the clearance may be about 1 mm or more.

In this way, by forming the thickness of the occlusal part 120' of the clear aligner 100' to be thick, it is possible to induce premature contact between a posterior region and antagonistic teeth, and accordingly, it is possible to more efficiently induce posterior intrusion in an orthodontic case that requires posterior intrusion.

The above description of the present invention is only for illustrative purposes, and those of ordinary skill in the art to which the present invention pertains should understand that the present invention may be easily modified into other specific forms without changing the technical spirit or essential features of the present invention. Therefore, the above-described embodiments should be understood as illustrative, instead of limiting, in all aspects. For example, each component described as a single type may be implemented in a distributed manner, and likewise, components described as being distributed may be implemented in a combined form.

The scope of the present invention is shown by the claims below, and all changes or modifications derived from the meaning and scope of the claims and their equivalent concepts should be construed as falling within the scope of the present invention.

### Description of reference numerals

100, 100' clear aligner
110 clear aligning body
111 outer surface
112 inner surface
113 channel
120, 120' occlusal part
130 strength reinforcing part
10a maxillary digital teeth model
10b mandibular digital teeth model
11a contact portion mapped on maxilla
11b contact portion mapped on mandible
20a maxillary tooth
20b mandibular tooth
30 initial occlusal area
40 additional occlusal area

## Claims

1. A clear aligner comprising:
a clear aligning body in which a channel accommodating a tooth to be aligned is formed to move the tooth from an initial position to a target position; and
an occlusal part defined in the clear aligning body and located in an occlusal area coming into contact with an antagonistic tooth during occlusion,
wherein a thickness of the occlusal part is formed to be thicker than a thickness of an area excluding the occlusal part.

2. The clear aligner of claim 1, wherein a thickness of the clear aligning body gradually increases toward the occlusal part.

3. The clear aligner of claim 1, further comprising a strength reinforcing part that is, relative to a movement direction of the tooth to be aligned, formed conformally on an outer surface of the clear aligning body located at a distal side from the movement direction to reinforce an orthodontic force.

4. The clear aligner of claim 3, wherein, for an expansion case, the strength reinforcing part is formed on a lingual side outer surface of the clear aligning body.

5. The clear aligner of claim 3, wherein, for a retraction case, the strength reinforcing part is formed on a buccal side outer surface of the clear aligning body.

6. The clear aligner of claim 3, wherein, for an extrusion case, the strength reinforcing part is formed on portions of an outer surface of the clear aligning body that are located on proximal sides from a dental root based on heights of contour of a tooth.

7. The clear aligner of claim 3, wherein, for an intrusion case, the strength reinforcing part is formed on portions of an outer surface of the clear aligning body that are located on distal sides from a dental root based on heights of contour of a tooth.

8. The clear aligner of claim 3, wherein, for a rotation case, the strength reinforcing part is formed on portions of an outer surface of the clear aligning body that are located diagonally from each other when four sections of an occlusal surface of a tooth are set based on groove lines formed on the occlusal surface.

9. The clear aligner of claim 3, wherein, for an angulation case, the strength reinforcing part is formed on a mesial side outer surface of the clear aligning body that is located in one direction based on a height of contour of a tooth and a distal side outer surface of the clear aligning body that is located in the other direction based on another height of contour of the tooth.

10. The clear aligner of claim 3, wherein, for a torque control case, the strength reinforcing part is formed on a lingual side outer surface of the clear aligning body that is located in one direction based on a height of contour of a tooth and a buccal side outer surface of the clear aligning body that is located in the other direction based on another height of contour of the tooth.
